(19)

Europäisches
Patentamt
European
Patent Office
Office européen
des brevets

(11) **EP 2 143 686 A1**

(12) **EUROPEAN PATENT APPLICATION**

(43) Date of publication:
**13.01.2010 Bulletin 2010/02**

(51) Int Cl.:
***C01B 31/02*** *(2006.01)*

(21) Application number: **09161029.5**

(22) Date of filing: **24.10.2007**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **25.10.2006 JP 2006289934
25.10.2006 JP 2006290379**

(62) Document number(s) of the earlier application(s) in
accordance with Art. 76 EPC:
**07830442.5 / 2 088 122**

(71) Applicant: **KURARAY CO., LTD.
Okayama 710-8622 (JP)**

(72) Inventors:
- **Kitano, Takahiro
  Tsukuba-shi Ibaraki 3050841 (JP)**
- **Ogushi, Masayasu
  Tainai-shi Niigata 9592691 (JP)**

(74) Representative: **Vossius & Partner
Siebertstrasse 4
81675 München (DE)**

Remarks:
This application was filed on 25-05-2009 as a
divisional application to the application mentioned
under INID code 62.

(54) **Transperent conductive film, transparent electrode substrate and method for producing liquid crystal alignment film by using the same, and carbon nanotube and method for producing the same**

(57) The present invention concerns single-walled carbon nanotubes prepared by arc discharge method, treated with nitric acid to form a suspension of purified nanotubes which is cross-flow filtrated. The resulting nanotubes exhibit a ratio of the intensities of the Raman bands D and G such that: $0 < ID/IG \leq 0.03$.

EP 2 143 686 A1

**Description**

Technical Field

The present invention relates to a transparent conductive film, in particular, to a carbon nanotube, a method for producing the carbon nanotube, and a transparent electrode substrate using the carbon nanotube.

Background Art

Recently, liquid crystal display (LCD) elements are widely used for electronic organizers, cell phones, video camcorders, computer displays, LCD TVs, and the like.
As LCD elements, the following two elements are known: so-called a TN (Twisted Nematic) LCD element that has a sandwich cell in which a nematic liquid crystal (LC) layer with positive dielectric anisotropy is sandwiched between two substrates, in each of which an LC alignment film made of polyamic acid or polyimide is formed on a transparent electrode substrate, and that has a structure in which the long axis of a liquid crystal molecule is twisted 90° toward one of the substrates from the other; and an STN (Super Twisted Nematic) LCD element that is superior to the TN LCD element in terms of the contrast and viewing angle characteristic.

Metal oxides such as indium tin oxide, and the like, are mainstream in materials used for an electrode of the transparent electrode substrate. As a method for forming an LC alignment film on the transparent electrode substrate, the following method is mainstream, in which: a solution of polyamic acid, polyimide soluble in a solvent, or the like, is printed by using the letterpress printing, the flexographic printing, or the like; and after heating the printed film, an LC alignment film is formed by rubbing the film in one direction with a cloth (rubbing member) of nylon, rayon, or the like. The orientation treatment method is usually termed a "rubbing method", in which an LC orientation is controlled by arraying LC molecules along the minute concaves and convexities arranged in a certain direction.

When a polyamic acid is used, the electrical characteristic is deteriorated while the printability is good. On the other hand, when a polyimide solution is used, the printability is deteriorated while the electrical characteristic is good, resulting in the difficulty of obtaining a uniform film. From a viewpoint of the solubility of polyimide, an amide-based solvent is often used; however, the amide-based solvent causes the printability to be deteriorated because the solvent generally has high surface tension.

Conventionally, in order to solve the problem, the following methods have been proposed, in which: the solubility of polyimide is improved by using a mixture of an oligomer of an acid anhydride having an aliphatic ring structure with an oligomer of a compound in which aromatic rings are combined together with an ether bond or the like (Patent Document 1); the wettability of polyimide is improved by using N,N-dimethylacetamide as a solvent (Patent Document 2) ; and a solvent with low surface tension is added (Patent Document 3).

Each method is excellent as a method for improving the wettability on an electrode substrate; however, according to the methods disclosed in Patent Documents 1 and 2, it is possible that the electrical characteristic is deteriorated because a polyamic acid is used in the same way as in the case of the aforementioned polyamic acid, and according to the method disclosed in Patent Document 3, there is a large impact on environment because a halogen-based solvent is used. Therefore, there has been a demand for a method of producing an alignment film by which a uniform alignment film can be obtained without deteriorating the electrical characteristic.

On the other hand, as transparent conductive films, a transparent conductive film using a single-walled carbon nanotube has conventionally been known.
Methods for producing a single-walled carbon nanotube are roughly divided into a chemical vapor deposition method, a laser vaporization method, and an arc discharge method. In the chemical vapor deposition method, a gas to be a material of carbon is degraded within a reactor to produce a single-walled carbon nanotube (Patent Document 4). In the method, it is possible that more defects are included as compared with other methods due to a low reaction temperature while a single-walled carbon nanotube with a high degree of purity can be produced. In the laser vaporization method, carbon is vaporized by irradiating a laser beam at a target containing a metal catalyst and carbon such that a single-walled carbon nanotube is produced within a laser vaporization apparatus (Patent Document 5). In the method, scale up of the method is difficult while a single-walled carbon nanotube with a high degree of purity and less deficiencies can be produced. In the arc discharge method, an arc discharge is generated by applying an arc voltage to a carbonaceous material, and then a carbon nanotube is produced by vaporizing a carbon material from the carbonaceous material (Patent Document 6). In the method, a single-walled carbon nanotube contains a large quantity of by-products, which is mainly a carbonaceous material other than a metal catalyst or a single-walled carbon nanotube, while a single-walled carbon nanotube with fewer deficiencies can be simply and easily produced. The method can be easily scaled up. Therefore, a purification process is needed in using the carbon nanotube produced in this method as a material for a member.

Accordingly, in the case of the application in which single-walled carbon nanotubes with fewer deficiencies are used in a large quantity, it is preferable that the method of producing a single-walled carbon nanotube by the arc discharge method is adopted; however, the purification process is needed in the method.

As to the purification methods of a single-walled carbon nanotube, many inventions have been made, which are roughly divided into a mechanical purification method, an electromagnetic purification method and a chemical purification method. In the mechanical purification method, an operation such as comminution (Patent Document 7), sonication (Patent Document 8), chromatography (Patent Document 8), or filtration (Patent Document 9), is adopted. The electromagnetic purification method is represented by the operations such as electrophoresis (Patent Document 10) and magnetic field application (Patent Document 11). In most cases, a degree of purity of a carbon nanotube purified only by the mechanical purification method or the electromagnetic purification method cannot be increased, and therefore such purification methods are generally combined with the chemical purification method, which will be described below. In the chemical purification method, an operation such as a dry oxidation or a wet oxidation is adopted. The dry oxidation refers to a gas-phase oxidation in which a carbon nanotube is heated to 600 to 1000°C in an oxidizing gas such as oxygen, water vapor and carbon dioxide, or in a mixture gas of the oxidizing gas with an inert gas such as nitrogen or argon (Patent Document 12). In the wet oxidization, a carbon nanotube is treated in an oxidizing liquid such as nitric acid, sulfuric acid, potassium permanganate, chlorosulfonic acid or a mixture of such liquids (Patent Documents 13 and 14).

The dry oxidization needs a high reaction temperature and lacks uniformity in reaction conditions due to a reaction between a solid and a gas, resulting in the difficulty of, controlling the optimal time and temperature.

In the wet oxidization, such disadvantages are overcome and the reaction can be performed uniformly. As a purification method in a practical scale, a combination of the wet oxidization with an inside-out circulation filtration is disclosed (Patent Document 5, Non-Patent Document 1).

However, the wet oxidization condition disclosed in the Documents is specified with respect to the single-walled carbon nanotube produced by the laser vaporization method, and specifically the carbon nanotube is reacted with a 2-3M nitric acid aqueous solution (about 20% nitric acid aqueous solution). The single-walled carbon nanotube produced by the arc discharge method could not be purified by the method because an oxidizing power of the method was too weak in the same oxidizing condition.

As a wet oxidizing condition of the single-walled carbon nanotube produced by the arc discharge method, a method of reacting the nanotube with a mixture solvent of sulfuric acid with nitric acid is disclosed (Patent Document 15); however, most of single-walled carbon nanotubes are degraded in the condition because of a too strong oxidizing power, resulting in a decreased yield. Further, a condition is disclosed in which the single-walled carbon nanotube is reacted with a concentrated nitric acid (70%) at a temperature of 110 to 170°C for 20 hours (Patent Document 16). A pressure vessel is needed for reaction of the nanotube in this condition, resulting in the difficulty of the scale-up of the method.

It can be considered that the purification method disclosed in Patent Document 2 is adopted in the wet oxidizing condition disclosed in Patent Documents 14; in caste, however, a process of subjecting the concentrated nitric acid itself to centrifugation is needed, which is in fact difficult to be scaled up in terms of safety, and it is hard to say that the method can be used industrially. Further, even if either technique disclosed in Patent Documents 5 and 14 is used, it is needed to repeat multiple times the processes of the centrifugation and the subsequent decantation, resulting in complicated processes. In particular, a longer working time is needed because a solid residue is necessary to be collected.

Patent Document 1: Japanese Patent Application Laid-Open No. 2002-88241
Patent Document 2: Japanese Patent Application Laid-Open No. 2006-53380
Patent Document 3: Japanese Patent Application Laid-Open No. 2006-154158
Patent Document 4: Japanese Patent Application Laid Open No. 2001-020071
Patent Document 5: National Publication of International Patent Application No. 2002-515847
Patent Document 6: Japanese Patent Application Laid-Open No. 2006-036575
Patent Document 7: National Publication of International Patent Application 2004-507436
Patent Document 8: Japanese Patent Application Laid-Open No. H06-228824
Patent Document 9: Japanese Patent Application Laid-Open No. 2003-286014
Patent Document 10: Japanese Patent Application Laid-Open No. 2000-072422
Patent Document 11: Japanese Patent Application Laid-Open No. 2006-069850
Patent Document 12: Japanese Patent Application Laid-Open No. H07-048110
Patent Document 13: Japanese Patent Application Laid-Open No. H08-012310
Patent Document 14: Japanese Patent Application Laid-Open No. H08-198611
Patent Document 15: Japanese Patent Application Laid-Open No. 2004-168570
Patent Document 16: Japanese Patent Application Laid-Open No. 2003-054921
Non-Patent Document 1: Appl. Phys. A 67, 29-37(1998), A. G. Rinzler, et al.

Disclosure of the Invention

Problems to be Solved by the Invention

Accordingly, an object of the present invention is to provide a method for producing an alignment film in which a uniform alignment film can be obtained without deteriorating an electrical characteristic, and a method for producing a carbon nanotube produced by an arc discharge method, in particular a single-walled carbon nanotube, in which a single-walled carbon nanotube can be produced in a practical scale and safely.

Means for Solving the Problems

The present inventors have found that the aforementioned problems can be solved by using a transparent electrode substrate with a high wettability. They have further found that, as a specific method for obtaining a transparent electrode substrate with a high wettability, the transparency and conductivity can be obtained by using a thin layer, a major component of which is carbon nanotube, and the high wettability can be obtained by controlling the shape of the carbon nanotubes in a film state. As a result of a further study, the inventors have completed the present invention.
That is, the present invention is a transparent conductive film characterized in that: a major component of the transparent conductive film is a single-walled carbon nanotube; the single-walled carbon nanotubes are present in a bundle state; and a rope-like shape, which is a state where the bundles are gathered together can be confirmed by scanning electron microscope (SEM) observation.
Further, the present invention preferably satisfies the following conditions: in the Raman intensity detected by irradiating a laser with a wavelength of 532 nm, the single-walled carbon nanotube has first absorption in the Raman scattering intensity within the Raman shift range of $1340 \pm 40$ cm$^{-1}$; the single-walled carbon nanotube also has second absorption in the Raman scattering intensity within the Raman shift range of $1590 \pm 20$ cm$^{-1}$; and the equation (1):

$$0 < ID/IG \leq 0.03 \qquad\qquad (1)$$

is satisfied, where the first absorption intensity is ID and the second absorption intensity is IG. The present invention also preferably satisfies the condition that a static contact angle of N-methyl-2-pyrrolidone on the transparent conductive film is 0° or more and 5° or less.
Further, the transparent conductive film of the present invention, preferably satisfies the condition that the single-walled carbon nanotubes are present in a bundle state in the conductive layer and the number of the bundles the length of which exceeds 1.5 $\mu$m is larger than that of the bundles the length of which is 1.5 $\mu$m or less.
The conductive film of the present invention may have a conductive layer containing a single-walled carbon nanotube with a COOM group (M is a metal element) on the substrate. Alternatively, the conductive film of the invention may have a conductive layer containing a polymer with a sulfonic acid group and a single-walled carbon nanotube on the substrate, or may have a polymer layer with a sulfonic acid group and a conductive layer containing a single-walled carbon nanotube on the substrate.
Also, the present invention is a transparent electrode plate using tie aforementioned transparent conductive film. It is preferable that a film thickness of the transparent conductive film in the transparent electrode plate is 10 nm or more and 500 nm or less. Also, the present invention is a method for producing an LC alignment film using the transparent electrode plate.
As a result of an intensive study, the present inventors have further found an optimal acid treatment condition in purifying a crude carbon nanotube obtained by the arc discharge method, and as a result of a subsequent study, the inventors have completed a method for producing a carbon nanotube by which the aforementioned problems can be solved.
That is, the present invention is a method for producing a carbon nanotube, which is characterized by including the following processes 1 to 4 in the described order:

process 1: a process in which a crude carbon nanotube is obtained by the arc discharge method;
process 2: a process in which the crude carbon nanotube is wetted with a solvent containing water;
process 3: a process in which the crude carbon nanotube is acid treated with an aqueous solution containing nitric acid, and the reaction is performed at a temperature of 60°C or more and 90°C or less and a reaction time is between 24 hours and 72 hours; and
process 4: a process in which a dispersion liquid for purified carbon nanotube is obtained by subjecting the reaction liquid obtained in the preceding process to inside-out circulation filtration. Herein, it is preferable that the crude carbon nanotube, which is obtained by the are discharge method in the process 1, contains 90% or more of the single-walled carbon nanotube among the whole carbon nanotube.

In the process 3 of the present invention, it is preferable that the aqueous solution containing nitric acid is a nitric acid aqueous solution with a concentration of 50% or more and 65% or less. It is also preferable that, in the process 3, assuming that the aqueous solution containing nitric acid is made of water, concentrated nitric acid and concentrated sulfuric acid, and respective volume ratios of which to the whose aqueous solution containing nitric acid are a (vol%), b (viol%) and c (viol%), the equations (2) and (3)

$$0.20 \leq \{a/(a+b+c)\} \leq 0.40 \qquad (2)$$

$$0.20 \leq \{b/(b+c)\} \leq 0.30 \qquad (3)$$

are satisfied. It is preferable that, in the process 4, a hollow-fiber membrane with a pore size of 0.1 $\mu$m or more and 1$\mu$m or less is used.

Also, it is preferable that the following processes 5, 6 and/or 7 are included between the process 3 and the process 4 :

process 5: a process in which the reaction liquid obtained in the preceding process is cooled and neutralized;
process 6: a process in which the reaction liquid obtained in the preceding process is added with a dispersant; and
process 7: a process in which an ultrasonic wave is irradiated to the reaction liquid obtained in the preceding process.

Still further, the present invention is a single-walled carbon nanotube produced by the aforementioned process, the carbon nanotube being characterized by satisfying the following conditions: in the Raman intensity detected by irradiating a laser with a wavelength of 532 nm, the single-walled carbon nanotube has first absorption in the Raman scattering intensity within the Raman shift range of $1340 \pm 40$ cm$^{-1}$; the single-walled carbon nanotube also has second absorption in the Raman scattering intensity within the range of $1590 \pm 20$ cm$^{-1}$; and the equation (1) :

$$0 < ID/IG \leq 0.03 \qquad (1)$$

is satisfied, where the first absorption intensity is ID and the second absorption intensity is IG.

Effect of the Invention

Because the transparent electrode substrate according to the present invention has a transparent electrode with a high wettability, a material for forming an LC alignment film can be uniformly coated. Accordingly, the material can be utilized advantageously in producing an LCD element. Furthermore, the method for producing a carbon nanotube according to the present invention is capable of utilizing a crude carbon nanotube produced by an arc discharge method, which is an inexpensive material, and capable of obtaining purified products with a high degree of purity in a large quantity; hence, the method is advantageously utilized in producing optical devices and electronic devices using carbon nanotubes.

Brief Description of the Drawings

Fig. 1 is a diagram illustrating a result of Raman measurement for a crude single-walled carbon nanotube,;
Fig. 2 is a diagram illustrating a result of Raman measurement for a purified single-walled carbon nanotube (Example 1);
Fig. 3 is a SEM image of a crude single-walled carbon nanotube;
Fig. 4 is a SEM image of a purified single-walled carbon nanotube (Example 1) ;
Fig. 5 is a diagram illustrating a result of Raman measurement for a purified single-walled carbon nanotube (Example 2);
Fig. 6 is a SEM image of a purified single-walled carbon nanotube (Example 2);
Fig. 7 is a SEM image of a transparent electrode substrate using a carbon nanotube according to Example 3; and
Fig. 8 is a SEM image of a transparent electrode substrate using a carbon nanotube according to Comparative Example 2.

Best Mode for Carrying Out the Invention

The present invention is a transparent conductive film, which is characterized in that: a major component of the transparent conductive film is a carbon nanotube; the carbon nanotubes are present in a bundle state; and a rope-like shape, which is the state where the bundles are gathered together, can be confirmed by SEM observation. Single-walled carbon nanotubes are typically present in a so-called bundle state, in which several single-walled carbon nanotubes are gathered into the bundle by the interaction of benzene rings composing the side walls of the carbon nanotubes. It is preferable that the number of the bundles the length of which exceeds 1.5 μm is larger than that of the bundles the length of which is 1.5 μm or less. It is further preferable that the number of the bundles the length of which is 2.5 μm or more is larger than that of the bundles the length of which is 1.5 μm or less.

As a method of measuring the length of the bundle, a method is cited in which the length of a single-walled carbon nanotube is measured by a SEM, but it is not limited thereto. The number of the bundles to be measured is not particularly limited; however, in order to obtain an accurate statistics, it is preferable that 50 or more of the bundles are measured. It is further preferable that 100 or more of the bundles are measured.

Conventionally, transparent conductive films using carbon nanotube have been reported as follows. In the reports of, for example: L. Hu et al., (Nano Lett., Vol. 4, No. 12 (2004), 2513-2517); Zhuangchun Wu et al., (Science, Vol. 305 (2004), 1273-1276) ; and M. Kaempgen et al. (Applied Surface Science, Vol. 252 (2005), 425-429), all of the single-walled carbon nanotubes are present in a bundle state, but a state in which the bundles are further gathered together is not confirmed. The diameters of the bundles are approximately 10 nm in the above reports, and therefore even when a transparent conductive film is produced by layering such single-walled carbon nanotubes, the wettability of the film cannot be improved because the concaves and convexities on the surface of the film are small.

In the present invention, it is needed that some of the bundles of the single-walled carbon nanotubes are further gathered together to form a rope-like shape. The diameter becomes 20 to 100 nm by forming the rope-like shape, enabling the concaves and convexities on the surface to be larger; thereby the wettability of the film can be improved.

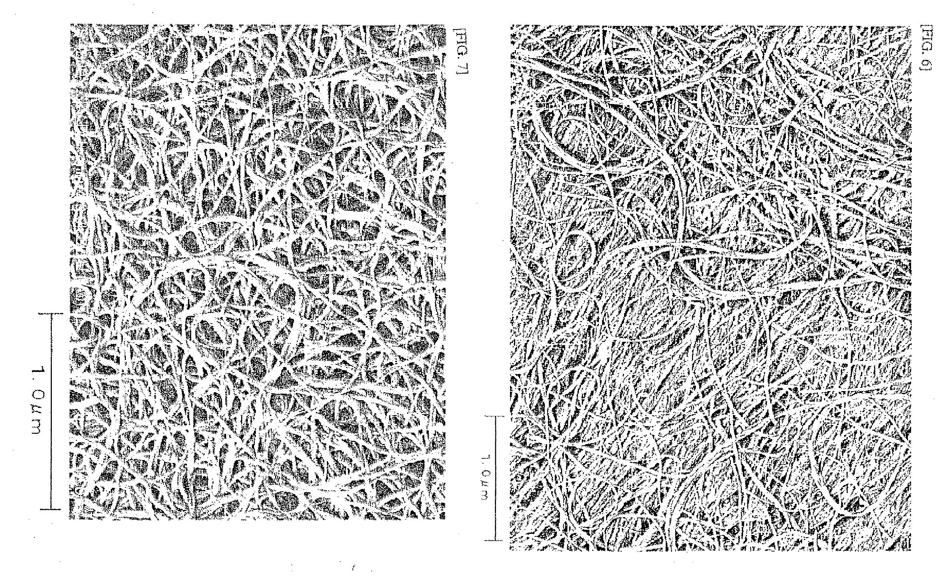

The bundle state and the rope state in which the bundles are gathered together can be distinguished from each other by SEM observation. For example, in Fig. 7, the bundle is seen as a piece of fiber and a rope state in which some of the bundles are gathered together can also be confirmed.

In the transparent conductive film according to the present invention, the rope state in which the bundles are gathered together is needed to be confirmed by SEM observation; however, all of the bundles thus present are not needed to be in the rope state, and it is acceptable that one or more parts where the rope state is confirmed by SEM observation, at a magnification of 50,000x, are present.

A method for producing the rope state is not particularly limited, but the method of applying a mechanical shear force to the single-walled carbon nanotube or the bundle is preferable. Specifically, the methods of performing a beads mill treatment, an inside-out circulation filtration treatment, in particular, a cross-flaw filtration treatment by a hollow-fiber membrane, and the like, in a state where the single-walled carbon nanotubes are dispersed in a liquid, can be cited.

The transparent conductive film according to the present invention may contain other components, for example, surfactant and the like, as long as the major component of the film is a single-walled carbon nanotube. In the present invention, the fact that the major component is a single-walled carbon nanotube specifically means the state in which, when the transparent conductive film is subjected to SEM observation, the single-walled carbon nanotubes are contained to the extent where the carbon nanotubes, the bundle made of the carbon nanotubes, or the rope-like shape in which the bundles are gathered together, can be confirmed to be present. The transparent conductive film may further contain a thermoplastic resin, thermosetting resin, photo-curable resin, dispersant, conductive polymer, pigment, and the like, within the range where the advantages of the invention are not impaired.

A substrate used in the transparent conductive film according to the present invention is not particularly limited as long as the substrate is a transparent sheet or film, etc. Examples of the substrate include acrylic, polyester, polycarbonate, polystyrene, styrene-acrylic copolymer, vinyl chloride resin, polyolefin, ABS (acrylonitrile-butadiene-styrene copolymer), cycloolefin resin, cellulosic resin, and glass. In addition, a substrate with a hard coat layer, antifouling layer, anti-glare layer, antireflection layer, or adhesive layer, etc., laminated between the substrate and the conductive layer, or on the surface of the substrate opposite to the conductive layer, can be adopted, if necessary.

It is preferable that the transparent conductive film used in the present invention has a surface resistivity of 1 Ω/□ or more and 10000 Ω/□ or less, and a total light transmittance of 40% or more, although the above condition differs according to the applications.

The carbon nanotube used in the present invention is not particularly limited as long has the carbon nanotube is a single-walled carbon nanotube; and a chemically or physically modified carbon nanotube may be used. Also, the method for producing the single-walled carbon nanotube is not particularly limited; and known production methods such as chemical vaporization method, laser vaporization method, and an arc discharge method, etc., may be used. The single-waited carbon nanotube produced by the arc discharge method is preferably used in terms of, in particular, crystallinity and productivity.

In general, a single-walled carbon nanotube mostly contains impurities such as amorphous carbon or a metal particle used as a catalyst at the time of production; however, it is more preferable that the single-walled carbon nanotube used in the present invention has a higher degree of purity.

Examples of the method for purifying a carbon nanotube include a liquid phase acid treatment using nitric acid and sulfuric acid, etc., a gas phase oxidation treatment in oxygen or air atmosphere, and a combination thereof.

A degree of purity of the single-walled carbon nanotube can be measured by the Raman measurement; and it is preferable that the transparent conductive film according to the present invention satisfies the following conditions: in the Raman intensity detected by irradiating a laser with a wavelength of 532 nm, the single-walled carbon nanotube has first absorption in the Raman scattering intensity within the Raman shift range of $1340 \pm 40$ cm$^{-1}$; the single-walled carbon nanotube also has second absorption in the Raman scattering intensity within the Raman shift range of $1590 \pm 20$ cm$^{-1}$; and the equation (1) :

$$0 < ID/IG \leq 0.03 \qquad (1)$$

is satisfied, where the first absorption intensity is ID and the second absorption intensity is IG.

In the equation (1), it is shown that the single-walled carbon nanotube has a higher degree of purity as the value of ID/IG is smaller. In the present invention, the value of ID/IG is preferably 0.03 or less, more preferably 0.02 or less. When the value of ID/IG is larger than 0.03, a degree of purity may be low and the transparency may be deteriorated. The transparent conductive film used in the invention preferably has a film thickness or 10 nm or more and 500 nm or less, although it differs according to applications. When a film thickness of the transparent conductive film is 10 nm or less, the conductivity is sometimes insufficient; and when the thickness is 500 nm or more, the transparency is sometimes insufficient.

As a method for forming the conductive layer on the substrate, a method is preferable, in which the carbon nanotubes are dispersed in a solvent to be coated to the substrate, and then the solvent is removed by heating. A method for dispersing the carbon nanotubes in a solvent is not particularly limited as long as the method is a known dispersion method, and examples of the method include: a method in which the surface of the carbon nanotube is modified by using a compound with a polar group such as a hydroxyl group, carboxyl group or amino group, as a dispersant; and a method in which the carbon nanotubes are dispersed by using a mechanical shear force such as roller mill, beads milt, ball mill, and sonification.

The solvent is not particularly limited as long as the solvent is generally used in a paint, and examples of the solvent include, for example: ketone compounds such as acetone, methyl ethyl ketone, methyl isobutyl ketone, and cyclohexanone; ester compounds such as methyl acetate, ethyl acetate, butyl acetate, ethyl lactate, and methoxyethyl acetate; ether compounds such as diethyl ether, ethylene glycol dimethyl ether, ethyl cellosolve, butyl cellosolve, phenyl cellosolve, and dioxane; aromatic compounds such as toluene and xylene; aliphatic compound such as pentane and hexane; halogenated hydrocarbons such as methylene chloride, chlorobenzene, and chloroform; alcohol compounds such as methanol, ethanol, n-propanol, and isopropanol; and water.

Assuming that the total weight of the liquid is 100 wt%, a ratio of the carbon nanotube to the solvent is preferably 0.01 wt% or more and 10 wt% or less, more preferably 0.1 wt% or more and 1 wt% or less. Further, if necessary, a resin may be contained within the range where the advantages of the present invention are not impaired; and examples of the resin include acrylic, polyester, polycarbonate, polystyrene, styrene-acrylic copolymer, vinyl chloride resin, polyolefin, ASS (acrylonitrile-butadiene-styrene copolymer), cycloolefin resin, vinyl acetate, butyral, epoxy, photo-curable resin, thermosetting resin, and the like.

A method for coating the liquid to the substrate is not particularly limited as long as the method is known; and examples of the method include dripping, coating method using a roller, die coating, spray coating as spraying a liquid on a substrate, and curtain flow coating. If a conductive film is needed to be processed into a desired shape when using a conductive film usually made of a metal oxide, the process termed etching is needed, in which a transparent conductive film is once formed on the whole surface of the substrate, and subsequently an unnecessary part of the film is removed. Ion the coating method used in the present invention, however, a target pattern can be formed only by printing the liquid into the desired shape with the use of a method such as letterpress printing, intaglio printing or gravure printing.

A process in which the solvent is removed by heating is not particularly limited as long as the process is known, and examples of the process include a oven and far-infrared oven, etc.

Further, the present invention provides a transparent conductive film in which a static contact angle of N-methyl-2-pyrrolidone on the transparent conductive film is 0° or more and 5° or less. The N-methyl-2-pyrrolidone is an organic solvent generally adopted for dissolving polyimide that is used in producing an alignment film; and a uniform polyimide thin film can be formed on the transparent electrode layer by using a substrate with a high wettability on N-methyl-2-pyrrolidone.

In the present invention, the static contact angle refers to the angle that, after dropping N-methyl-2-pyrrolidone in a droplet form on the substrate, is formed between the tangent line at the point formed between the substrate and the droplet, and the substrate, in an equilibrium state. It is represented that wettability is higher as a contact angle is smaller; and the present invention is a transparent conductive film in which a contact angle of N-methyl-2-pyrrolidone on the transparent electrode layer is 0° or more and 5° or less. Wettability is deteriorated when a contact angle is 5° or more, and it is possible that, when the polyimide solution is coated to the transparent electrode layer, cussing or pinhole may occur and hence a uniform film cannot be obtained.

Specifically, the transparent conductive film of the present invention is a film, which is characterized in that: the major component of the transparent conductive film is a single-waited carbon nanotube; the single-walled carbon nanotubes are present in a bundle state; and a rope-like shape, which is a state where the bundles are gathered together, can be confirmed by SEM observation. Thereby, the surface of the transparent conductive film has a minute concave and convex shape, allowing the wettability to be enhanced.

The transparent conductive film of the present invention may have a conductive layer containing a single-walled carbon nanotube with a carboxyl group. The single-walled carbon nanotube with a carboxyl group is particularly obtained by subjecting the single-walled carbon nanotube to wet oxidation with the use of nitric acid or a mixed acid of nitric acid with sulfuric acid. The carboxyl group is one represented by COOM (M is a metal element such as K, Na, or the like).

Whether a carboxyl group (COOM group) is contained in the single-waited carbon nanotube can be confirmed by existence of aggregation of the carbon nanotubes when a polyvalent metal ion, which can be ion-bonded to the carboxyl group, is added in the dispersion liquid for single-walled carbon nanotube (see Langmuir (2001) 17, 7172). Examples of the polyvalent metal ion, which can be ion-bonded to the carboxyl group, include calcium chloride, copper chloride, and the like. In the case where the aggregation of the carbon nanotubes occurs when a polyvalent metal ion, which can be ion-bonded to a carboxyl group, is added in the dispersion liquid for single-walled carbon nanotube, it can be determined that the single-walled carbon nanotube has a carboxyl group (COOM group). Herein, examples of the metal element M include: alkaline metals such as Li, Na, and K; alkaline earth metals such as Be, Mg, and Ca; and transition metals such as Al, Sc, Ti, V, Cr, Mn, Fe, Co, Ni, Cu, Zn, and Pd. Among these metal elements, however, monovalent metal elements are preferable, and alkaline metals such as Li, Na, and K, etc., are more preferable. Among these, Na and K are particularly preferable. For example, in the case of an application in which conductivity is particularly required, COONa is preferable, and in the case of an application in which high-temperature heat resistance is particularly required, COOK is preferable.

The transparent conductive film of the present invention may have a conductive layer containing a polymer with a sulfonic acid group and a single-walled carbon nanotube on the substrate, or may have a polymer layer with a sulfonic acid group and a conductive layer containing the single-walled carbon nanotube on the substrate.

a polymer with a sulfonic acid group used in the present invention, a fluororesin with a sulfonic acid group is preferable. Examples of the fluororesin include, for examples, polytetrafluoroethylene copolymer, tetrafluoro ethylene perfluoroalkyl vinyl ether copolymer, tetrafluoro ethylene hexafluoropropylene copolymer, tetrafluoroethylene-ethylene copolymer, polyvinylidene fluoride, polychlorotrifluoroethylene, chlorotrifluoroethylene-ethylene copolymer. Of course, these are no more than preferred specific examples, and polymers other than these may also be used.

A polystyrene sulfonate copolymer is also a preferred polymer.

Besides that, for example, polyetherketone, polyether ether ketone, polyethersulfone, polyether ether sulfone, polysulfone, polysulfide, polyphenylene, polyphenylene oxide, polyimide, polybenzimidazole, polyamide, or a copolymer of these, etc., can also be used. Of course, these resins have a sulfonic acid group.

In particular, from a viewpoint of the solubility in a solvent, a fluororesin with a sulfonic acid group and a polystyrene sulfonate copolymer are more preferable.

The conductive layer is configured by coating a solution in which, for example, a carbon nanotube and a polymer with a sulfonic acid group are dispersed in a solvent, to the base material (substrate) and then removing the solvent by drying (heating).

Subsequently, with respect to the transparent conductive film in which the conductive layer containing the single-walled carbon nanotube and the polymer layer with a sulfonic acid group are formed on the substrate, in particular, with respect to the transparent conductive film in which the conductive layer containing the single-walled carbon nanotube is formed on the substrate, and then the polymer layer with a sulfonic acid group is formed thereon, a description will be made below.

The substrate, the single-walled carbon nanotube, and the polymer with a sulfonic acid group, in the transparent conductive film of the present example, can use the materials stated above, respectively. A method for coating the solution can also adopt the methods stated above. In the aforementioned example, the layer formed on the substrate is basically the conductive layer only. However, in the present example, at least two layers, the conductive layer containing the single-walled carbon nanotube and the polymer layer with a sulfonic acid group, are formed. As a method for laminate-forming such multiple layers, a double-layer coating method, in which the lower layer (conductive layer containing the single-walled carbon nanotube) and the upper layer (polymer layer with a sulfonic acid group) are simultaneously formed, may be adopted as well as a method in which the upper layer is coated after the lower layer is coated.

The present invention provides a transparent electrode substrate using the aforementioned transparent conductive film.

The transparent electrode substrate according to the invention is not particularly limited as long as the substrate uses the transparent conductive film according to the invention; hence, the whole surface of the substrate may be covered with electrodes, or the substrate may be subjected to patterning. In the case of the transparent electrode subjected to patterning, the electrode may be produced by a method in which the conductive film is once applied on the whole surface of the substrate and subsequently part of the film is removed, or produced by another method in which the transparent electrode is applied by the pattern printing. Alternatively, a color filter layer or a dielectric layer may be formed between the substrate and the transparent electrode. A film thickness of the transparent conductive film used in the transparent electrode is preferably 10 nm or more and 500 nm or less. When the film thickness of the transparent conductive film is 10 nm or less, the conductivity is sometimes insufficient; and when the film thickness is 500 nm or more, the transparency is sometimes insufficient.

The present invention provides a method for producing an LC alignment film using the transparent electrode substrate according to the invention.

A method for producing the alignment film according to the invention is not particularly limited as long as the transparent electrode substrate of the invention is used; however, the method in which a polyimide solution or a polyimide precursor solution is coated to the transparent electrode substrate of the invention is preferable. It is preferable that the film thickness of the alignment film is at least larger than the bump between the concave and convex on the transparent conductive layer, specifically, the thickness is 100 nm or more and 10 μm or less.

Further, in the method, a polyimide film can be formed from the due precursor or the solvent can be removed by heating, if necessary. It is preferable that the heating temperature falls within the range where the substrate to be used is not deformed.

A method for orienting the LC is not particularly limited as long as the method is known, and examples of the method include a method in which the surface of the polyimide film is physically subbed and a method in which an activated energy ray is irradiated.

The present invention is a method for producing a carbon nanotube, which is characterized by including the following processes 1 to 4 in the described order:

process 1: a process in which a crude carbon nanotube is obtained by the arc discharge method;
process 2: a process in which the crude carbon nanotube is wetted with a. solvent containing water;
process 3: a process in which the crude carbon nanotube is acid treated with an aqueous solution containing nitric acid, and the reaction is performed at a temperature of 60°C or more and 90°C or less and a reaction time is between 24 hours and 72 hours; and
process 4: a process in which a dispersion liquid for purified carbon nanotube is obtained by subjecting the reaction liquid obtained in the preceding process to inside-cut circulation filtration.

Each process of the method for producing the carbon nanotube according to the present invention will be described below. The process 1 is one in which the crude carbon nanotube is obtained by the arc discharge method. The crude carbon nanotube used in the method of the invention is needed to be obtained by the are discharge method. A carbon nanotube produced by a method other than the arc discharge method is different from the above carbon nanotube in terms of quantity of impurities and the number of defects; and hence, a degree of purity may not be improved, or a yield may be deteriorated, In the arc discharge method, an arc discharge is generated by applying an arc voltage to a carbonaceous material, and then a crude carbon nanotube is produced by vaporizing a carbon material from the carbonaceous material; and a metal catalyst such as nickel, iron, or the like, may be contained in the carbonaceous material.

The crude carbon nanotube used in the present invention is not particularly limited as long as the nanotube is obtained by the arc discharge method, and the crude carbon nanotube is applicable to various carbon nanotubes including a single-walled carbon nanotube, multi-walled carbon nanotube, double-walled carbon nanotube, etc.; however, the crude carbon nanotube is particularly useful for producing a purified single-walled carbon nanotube. When intending to obtain the purified single-walled carbon nanotube, the crude carbon nanotube obtained by the arc discharge method preferably contains 90% or more of the single-walled carbon nanotube among the whole carbon nanotube (single-walled carbon nanotube + multi-walled carbon nanotube), more preferably 95% or more. The ratio of the single-walled carbon nanotube can be determined by transmission electron microscope (TEM) observation.

In the process 2, the crude carbon nanotube is wetted with a solvent containing water.
In the method for producing the carbon nanotube according to the present invention, a step in which an acid is used is included in the process 3. Generally, contact of a carbon material, with a strong acid may cause a fire, and therefore a step in which the crude carbon nanotube is wetted with a solvent containing water is needed in order to prevent a fire. A solvent used in the process 2 is not particularly iimited as long as the solvent contains at least water; however, it is preferable that the solvent substantially prevents a fire and has a good compatibility with a strong acid. Specifically, examples of the solvent include water, methanol, ethanol, propanol, dimethylformamide, dimethyl sulfoxide, acetone, and acetonitrile.

In the process 3, the crude carbon nanotube is acid treated with an aqueous solution containing nitric acid and the reaction is performed at a temperature of 60LC or more and 90°C or less and a reaction time is between 24 hours and 72 hours. The process 3 is needed to dissociate the physical bonding between the carbon nanotube and the impurities, and in the process, amorphous carbon is also degraded to some extent. An aqueous solution used for the acid treatment tin the process 3 is to contain the solvent containing water, which is used in the process 2, and the aqueous solution is not particularly limited as long as the aqueous solution contains nitric acid; and specific examples thereof include nitric acid alone and a mixed acid of nitric acid with sulfuric acid, hydrogen peroxide solution, hydrochloric acid, or the like.

When using only nitric acid in the present invention a nitric acid aqueous solution with a concentration of 30% or more and 70% or less is preferably used, and a nitric acid aqueous solution with a concentration of 50% or more and 65% or less is more preferably used. When a concentration of the nitric acid aqueous solution is 30% or less, a reaction rate is small, on the other hand, when that is 70% or more, the danger in handling the solution is high.

A mixed acid of nitric acid with sulfuric acid can also be preferably used in the present invention. Specifically, assuming that the aqueous solution containing nitric acid in the process 3 is made of water, 69% nitric acid and 98% sulfuric acid, and each volume ratio to the whole aqueous solution containing nitric acid is a (vol%), b (vol%), and c (vol%), respectively, it is preferable that the equations (4) and (5) are satisfied:

$$0.10 \leq \{a/(a+b+c)\} \leq 0.50 \quad (4)$$

$$0.20 \leq \{b/(b+c)\} \leq 0.80 \quad (5)$$

and it is more preferable that equations (2) and (3) are satisfied:

$$0.20 \leq \{a/(a+b+c)\} \leq 0.40 \quad (2)$$

$$0.20 \leq \{b/(b+c)\} \leq 0.30 \quad (3).$$

When the value of {a/ (a+b+c)} is smaller than 0.1, there is a risk that an oxidizing power is too strong, thereby the carbon nanotube is degraded, on the other hand, when that is larger than 0.5, the oxidizing power is too weak, thereby the reaction rate is small. When the value of {b/(b+c)} is smaller than 0.20, or when that is larger than 0.8, there is a risk that the oxidizing power is too weak, thereby the reaction rate is small.

In the process 4, a dispersion liquid for purified carbon nanotube is obtained by subjecting the reaction liquid obtained in the preceding process to filtration. In the reaction liquid with which the carbon nanotube is acid treated, particles of the impurities of about 20 nm in diameter and the bundles of the carbon nanotubes, which are in a state of being separated, are dispersed or precipitated in the solution. Therefore, the impurities can be removed by filtering the solution with the use of a filter, pore size of which is larger than the size of the impurities and smaller than that of the bundle of the carbon nanotubes.
A filtration method is not limited as long as the method is a known internal pressure circulation filtration method; and a cross-flow filtration using a hollow-fiber membrane is preferably used. When a shear force is applied to the bundles of the carbon nanotubes by performing the inside-cut circulation filtration, the bundles are twisted together, allowing the carbon nanotubes in a rope state to be formed.

A method for producing the carbon nanotube according to the present invention is not particularly limited as long as the method includes the aforementioned processes 1 to 4; however, it is preferable that the method includes the following processes 5 to 7 between the process 3 and the process 4.

In the process 5, the reaction liquid obtained in the preceding process is cooled and neutralized, and by including this process, dispersibility of the carbon nanotubes and the impurities in the reaction liquid is improved, allowing filtration efficiency to be increased, and further the following process to be performed safely.

A neutralizer used in the process 5 is not particularly limited as long as the neutralizer is a compound exhibiting alkaline, and sodium hydroxide, sodium carbonate, sodium hydrogen carbonate, etc. are preferable; and from a viewpoint of suppressing the heat of neutralization, sodium carbonate or sodium hydrogen carbonate is more preferable.

In the process 6, the reaction liquid obtained in the preceding process is added with a dispersant, and by including this process, the dispersibility of the carbon nanotubes and the impurities in the reaction liquid is improved, allowing filtration efficiency to be increased.

The dispersant is not particularly limited as long as that is a known compound; however, among them, a dispersant made of a compound containing an alkyl benzyl group is preferable from a viewpoint of the dispersibility. When an alkyl group contained in the alkyl benzyl group is too small, the dispersion capability is low, on the other hand, when that is too large, the water solubility is deteriorated; hence, the number of carbons contained in the alkyl group is preferably 5 or more and 15 or less, more preferably 8 on more and 12 or less.

As the dispersant, a nonionic or anionic dispersant is preferable. Specific examples include polyethylene glycol mono(octylphenyl)ether, polyethylene glycol mono(nonylphenyl)ether, polyethylene glycol monododecyl phenyl ether, octyl benzene sulfonate, nonyl benzene sulfonate, dodecylbenzene sulfonate, dodecyl diphenyl ether disulfonate, mono isopropyl naphthalene sulfonate, diisopropyl naphthalene sulfonate, tri isopropyl naphthalene sulfonate, dibutyl naphthalene sulfonate, and naphthalene sulfonate formalin condensation produce, etc. Among them, sodium dodecylbenzene sulfonate is preferable, and straight-chain sodium dodecylbenzene sulfonate is more preferable.

In the process 7, the reaction liquid obtained in the preceding process is irradiated with ultrasonic waves; and by including the process, the dispersibility of the carbon nanotubes and the impurities in the reaction liquid is improved, allowing filtration efficiency to be increased. A method for irradiating ultrasonic waves is not particularly limited as long as the method is known; and a bath and horn sonicator can be used, and a horn sonicator is more preferable from a viewpoint of treatment in a shorter time.

In the present invention, if at least two processes of the processes 5 to 7 are included between the process 3 and the process 4, the processes are preferably included in the order or the process 5, process 6, and process 7.

A method for producing the carbon nanotube according to the present invention is not particularly limited as long as the method includes the aforementioned processes 1 to 4; however, it is more preferable that the process 8 is further included after the process 4. In the process 8, the carbon nanotubes are aggregated by adding an aggregating agent in the dispersion liquid for purified carbon nanotube such that the carbon nanotubes are taken out.

By performing this process, the purified carbon nanotubes can be taken out in a solid state. A aggregating agent is not particularly limited as long as the agent is a compound capable of lowering dispersion stability in the dispersion liquid; and examples of a method oaf lowering the dispersion stability include: a method in which the dispersion stability is lowered by a solvent shock, and a method in which a salt is formed with the use of the carboxyl group generated in the acid treatment of the carbon nanotube.

An aggregating agent using the solvent shock is not particularly limited as long as the agent is a water-soluble organic solvent; and examples of the agent include methanol, ethanol, propanol, dimethylformamide, dimethyl sulfoxide, acetone, acetonitrile. Among them, propanol is preferable, and isopropanol is the most preferable. An additive amount of the organic solvent to the dispersion liquid for carbon nanotubes is preferably 50 to 200 V/V%, more preferably 70 to 150 V/V%.

An aggregating agent for forming a salt with the use of the carboxyl group of the carbon nanotube is not particularly limited as long as the agent is a salt containing a multivalent cation, and examples of the agent include: a halide of magnesium, aluminum, calcium, iron, cobalt, nickel, copper, zinc, or the like; a hydroxide thereof; a sulfate thereof; and an ammonium salt thereof. Specifically, magnesium chloride, aluminum chloride, calcium chloride, ferrous sulfate, cobalt chloride, nickel chloride, copper sulfate, and zinc chloride can be cited; among them, a copper salt, ionization tendency of which is small, is preferable and copper sulfate is more preferable.

A degree of purity of the purified carbon nanotube can be determined by Raman spectrum measurement. Specifically, a degree of purity of the carbon nanotube can be determined by an intensity ratio oaf an absorption intensity derived from the graphene sheet, major component of the carbon nanotube, to an absorption intensity derived from a component representing a carbon material other than the graphene sheet.

For example, when measuring the carbon nanotube produced by the arc discharge by irradiating a laser with a wavelength of 532 nm, the carbon nanotube has first absorption in the Raman scattering intensity within the Raman shift range of $1340 \pm 40$ cm$^{-1}$, and also has second absorption in the Raman scattering intensity within the Raman shift range of 1590

$\pm 20$ cm$^{-1}$. Herein, the first absorption is said to be an absorption derived from the graphene sheet, and the second one is said to be that derived from the SP3 orbital of a carbon atom. That is, a degree of purity of the carbon nanotube is higher as the second absorption intensity is smaller relative to the first absorption intensity.

The single-walled carbon nanotube obtained by the production methods of the present invention satisfies the following condition: in the Raman intensity detected by irradiating a laser with a wavelength of 532 rim, the single-walled carbon nanotube has first absorption in the Raman scattering intensity within the Raman shift range of 1340 $\pm$ 40 cm$^{-1}$; the single-walled carbon nanotube also has second absorption in the Raman scattering intensity within the Raman shift range of 1590 $\pm$ 20 cm$^{-1}$; and the equation (1) :

$$0 < ID/IG \leq 0.03 \qquad (1)$$

is preferably satisfied,
and further, the equation (6):

$$0 < ID/IG \leq 0.02 \qquad (6)$$

is more preferably satisfied, where the first absorption intensity is ID and the second absorption intensity is IG. When the value of ID/IG is larger than 0.03, it is possible that the degree of purity of the single-walled carbon nanotube is low.

The carbon nanotube obtained by the production method of the present invention has less defects and impurities, and therefore the nanotube is suitable for a hydrogen storage material and a transparent conductive material.

Examples

Hereinafter, the present invention will be specifically described based on examples, but should not be limited thereto.

<Example 1>

30 g of the crude single-walled carbon nanotubes (made by CarboLex Inc.), which was obtained by the arc discharge method, and 300 ml of distilled water were fed into a 5 L-separable flask such that the crude carbon nanotubes were completely wetted with the distilled water. When observing the crude carbon nanotubes by a transmission electron microscope (TEM), there was no multi-walled carbon nanotube observed.

After 2700 ml of 69% nitric acid (made by Wako Pure Chemical Industries, Ltd.) was drop-added while stirring the liquid with a mechanical stirrer, the liquid was stirred at 85°C for 48 hours.

The reaction liquid was cooled to room temperature, and then sodium carbonate (made by Wako Pure Chemical Industries, Ltd.) in a powder state was supplied into the liquid while stirring the liquid, until the pH of the reaction liquid became 10. A collection rate of the crude single-walled carbon nanotube was 51% at the time.

Into the reaction liquid pH of which became 10, sodium dodecylbenzenesulfonate (soft type) (made by TOKYO CHEMICAL INDUSTRY CO., LTD) was supplied 6g, splid content, and then ultrasonic waves were irradiated to the liquid for five minutes with a cone-type ultrasonic homogenizer (apparatus: ULTRASONIC HOMOGENIZER MODEL UH-600 SR made by SMT Co., LTD).

The reaction liquid was subjected to centrifugation at 13000 rpm for one hour (apparatus: CR 26H made by Hitachi Koki Co., Ltd.). The supernatant liquid was collected to be a coarsely purified liquid. A collection rate of the unpurified single-walled carbon nanotube was 20% at the time.

The coarsely purified liquid was fed into a 2 L-polyethylene tank to be subjected to cross-flow filtration. A hollow-fiber membrane module used had a pore size of 200 nm and a membrane area of 5800 cm$^2$ (made by SPECTRUM LABORATORIES. INC), and a cleaning liquid was a weak alkaline aqueous solution in which sodium dodecylbenzenesulfonate (soft type) was added in 0.005 M sodium hydroxide solution in an amount that a weight ratio thereof was to be 0.2 wt%. The purified single-walled carbon nanotube was obtained by cleaning the coarsely purified liquid with 20.0 L of the cleaning liquid.

After taking out 300 my of the dispersion liquid for purified single-walled carbon nanotube, 300 ml of isopropyl alcohol was supplied in the dispersion liquid to aggregate the purified single-walled carbon nanotubes, and subsequently the liquid was subjected to centrifugation at 20000 rpm for 10 minutes (apparatus: CR 26H made by Hitachi Koki Co., Ltd. The residue was collected to be subjected to Raman measurement (wavelength: 532 nm, apparatus: HoloLab 5000 made by Shimadzu Corporation). The value of ID/IG was 0.016. A collection rate of the unpurified single-walled carbon nanotube was 8% at the time.

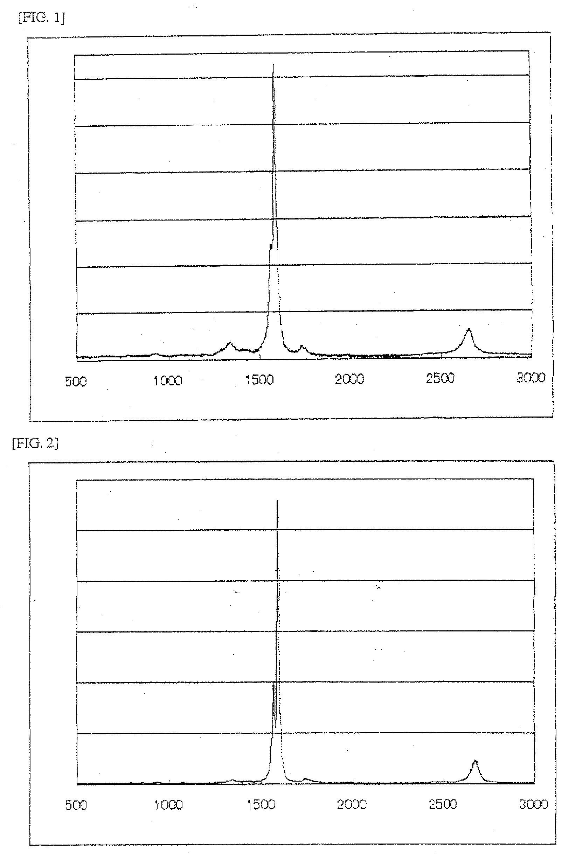

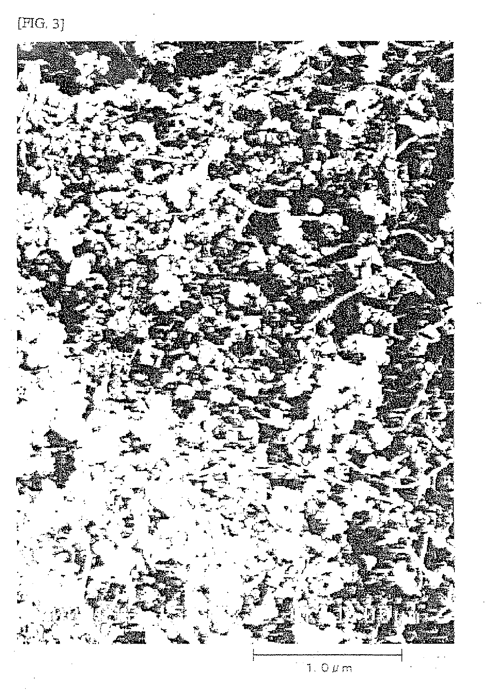

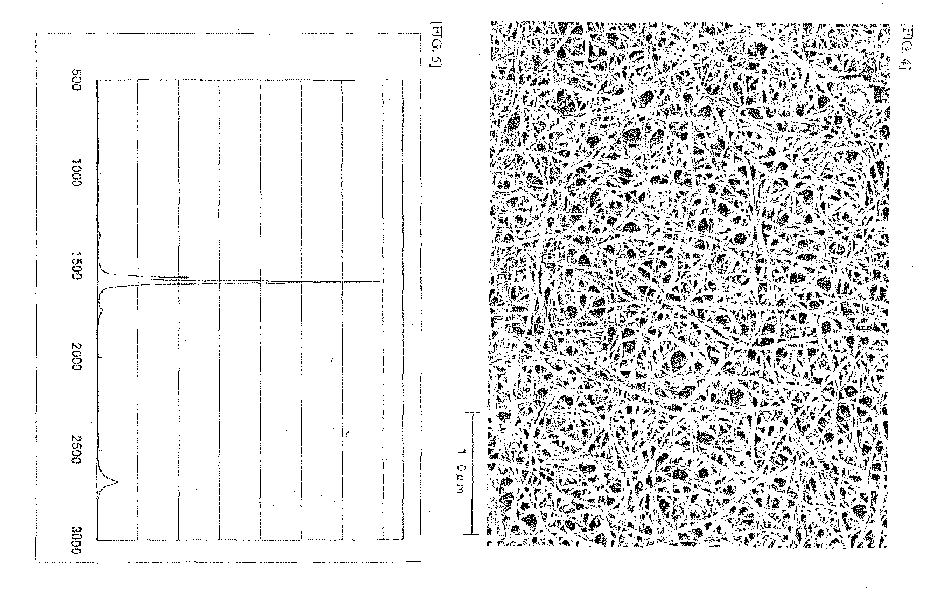

It was known that the single-walled carbon nanotube with a high degree of purity was obtained by comparing the result of Raman measurement (Fig. 1, ID/IG=0.059) and the scanning electron microscope (hereinafter, simply referred to as SEM) image (Fig. 3) with respect to the unpurified single-walled carbon nanotube, which was produced by the arc discharged method, to the result of Raman measurement (fig. 2) and the SEM image (Fig. 4) with respect to the purified single-walled carbon nanotube.

<Example 2>

Herein, the same operations as in Example 1 were performed only with an exception that the step of Example 1 in which 2700 ml of 69% nitric acid (made by Wako Pure Chemical Industries, Ltd.) was drop-added, was replaced by a step in which 420 ml of water, 420 ml of 69% nitric acid (made by Wako Pure Chemical Industries, Ltd.) and 1260 ml of 97% sulfuric acid (made by Wako Pure Chemical Industries, Ltd.), were sequentially drop-added.

Herein, assuming that each volume ratio of water, concentrated nitric acid and concentrated sulfuric acid, to the whole aqueous solution containing nitric acid, is a (vol%) , b (vol%) andc (vol%), respectively, {a/(a+b+c)}=0.30 and $0.20 \leq$ {b/(b+c) }==0.25 held. As a result of the Raman measurement, the value of ID/IG was 0.010 (Fig. 5). The SEM image is shown in Fig. 6.

From the results of Examples 1 and 2, it can be understood that, according to the present invention, the single-walled carbon nanotube with a high degree of purity can be produced in a practical scale and safely by using the crude single-walled carbon nanotube, which are obtained by the arc discharge method. Pisa, from Figs. 4 and 6, it can be understood that carbon nanotubes in a rope state are obtained.

<Example 3>

A dispersion liquid for purified single-walled carbon nanotube was obtained in the same way as in Example 1 except that the coarsely purified liquid was fed into a 300 ml-flask, and subjected to cross-flow filtration with the use of a hollow-fiber membrane with a pore size of 200 nm and a membrane area or 105 cm$^2$ (trade name: MidiKros Cross-flow Module, made by SPECTRUM LABORATORIES. INC).

In 300 ml of the dispersion liquid for purified single-walled carbon nanotube, 300 ml of isopropyl alcohol was fed to aggregate the purified single-walled carbon nanotubes, which were then subjected to centrifugation at 20000 rpm for 10 minutes (apparatus: CR 26H made by Hitachi Koki Co., Ltd.) . The residue was collected to be subjected to Roman measurement (wavelength: 532 nm, apparatus: HoloLab 5000 made by Shimadzu Corporation). The value of ID/IG was 0.016.

The residue was collected and fed in 300 ml of distilled water, and thereafter ultrasonic waves were irradiated to the liquid for five minutes with a cone-type ultrasonic homogenizer (apparatus: ULTRASONIC HOMOGENIZER MODEL UH-600 SRmade by SMT Co., Ltd) to obtain an aqueous dispersion liquid for purified carbon nanotube.

The aqueous dispersion liquid for purified carbon nanotube thus obtained was spray coated on a polyester film with a thickness of 125 $\mu$m (trade name: COSMOSHINE A 4100 made by TOYOBO CO., LTD.) to obtain a transparent electrode substrate.

A contact angle of N-methyl-2-pyrrolidone on the transparent conductive film thus obtained was 0° (apparatus: Erma Goniometer Type Contact Anglemeter made by Erma Kogaku Co., Ltd.) . A surface resistivity thereof measured by the four-point probe and two-probe method (apparatus: Loresta FP made by Dia Instruments Co., Ltd.) was 170 $\Omega$/□, and a total light transmittance measured (apparatus: Direct reading type haze computer made by Suga Test Instrument Co., Ltd.) was 60.5%.

An image of the surface of the transparent electrode substrate obtained in Example 3 is shown in Fig. 7.

As is clear from Fig. 7, the carbon nanotubes are present in a bundle state and a rope state, which is a state where the bundles are gathered together, can be confirmed in the central part, etc., of Fig. 7.

<Comparative Example 1>

A contact angle of N-methyl-2-pyrrolidone on a transparent electrode substrate (trade name: 300 RK (CL) made by TOYOBO CO., LTD.), of polyester film of which an ITO film is laminated, was 11° (apparatus: Erma Goniometer Type Contact Anglemeter made by Erma Kogaku Co., Ltd.).

A surface resistivity thereof measured by the four-point probe and two-probe method (apparatus: Loresta FP made by Dia Instruments Co., Ltd.) was 250 $\Omega$/□ and a total light transmittance measured (apparatus: Direct reading type haze computer made by Suga Test Instrument Co., Ltd.) was 88.5%.

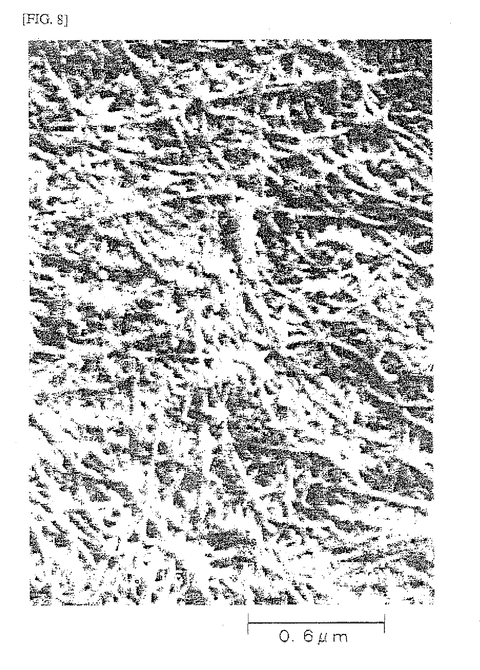

In 10 g of an aqueous solution containing z sodium dodecyibenzenesulfonate (soft type), 10 mg of single-walled carbon nanotube produced by the chemical vaporization method (made by Carbon Nanotechnologies Inc.) was fed, and then ultrasonic waves were irradiated to the liquid for five minutes with the cone-type ultrasonic homogenizer (apparatus: ULTRASONIC HOMOGENIZER MODEL UH-600 SR made by SMT Co. , Ltd) thereafter the liquid was subjected to centrifugation at 3000 rpm for 20 minutes (apparatus: CR 26H made by Hitachi Koki Co., Ltd.). The supernatant liquid was collected to obtain an aqueous dispersion liquid for purified carbon nanotube.
The dispersion liquid thus obtained was spray coated in the same way as in Example 3 to obtain a transparent electrode substrate.
A contact angle of N-methyl-2-pyrrolidone on the transparent electrode substrate thus obtained was 10° (apparatus: Erma Goniometer Type Contact Anglemeter made by Erma Kogaku Cho., Lid.).
A surface resistivity thereof measured by the four-point probe and two-probe method (apparatus: Loresta FP made by Dia Instruments Co., Ltd.) was 1500 $\Omega/\square$, and a total light transmittance measured (apparatus: Direct reading type haze computer made by Suga Test Instrument Co., Ltd.) was 65.0%.
A SEM image of the surface of the transparent electrode substrate obtained in Comparative Example 2 is shown in Fig. 8. As clear from Fig. 8, the carbon nanotubes are present in a bundle state, but a rope-like shape, which is a state where the bundles are gathered together, cannot be observed.
From the results of the aforementioned Example 3 and Comparative Examples 1 and 2, it can be understood that the transparent electrode substrate in which the carbon nanotubes are used and a rope-like shape, which is a state where the bundles are gathered together, is confirmed by SEM observation has higher wettability. Accordingly, in producing an alignment film, a uniform film without a cissing and pinhole can be obtained on the transparent electrode substrate obtained in Example 3 as compared to those obtained in Comparative Examples 1 and 2.

<Reference Example>

The aqueous dispersion liquid for single-walled carbon nanotube obtained in Example 1 was spray coated on a PET film (trade name: COSMOSHINE A 4100 made by TOYOBO CO., LTD.) to form a conductive layer.
A total light transmittance of the transparent conductive film thus obtained measured by an apparatus (Direct reading type haze computer made by Suga Test Instrument Co., Ltd.) was 80%, and a surface resistivity measured by an apparatus (Loresta FP made by Dia Instruments Co., Ltd.) was 560 $\Omega/\square$.

<Examples 4>

On the transparent conductive film obtained in Reference Example, n-propyl alcohol solution containing perfluorosulfonate/PTFE copolymer (about 1 milliequivalent/g of sulfonic acid group: Notion (trade name) made by DuPont) (solid content concentration: about 1 mass%) was bar-coated such that a dry film thickness is to be about 100 nm. There was no change in the total light transmittance and the surface resistivity.
After the sample was stored at 80°C for three days, the surface resistivity was measured, and thereafter the sample was subjected to a high-temperature durability test; and a surface resistivity after the high-temperature test was 604 $\Omega/\square$, a change rate of surface resistivity was 108%.
A surface resistivity after the high-temperature test with respect to Reference Example was 2800 $\Omega/$, and a change rate thereof was 483%.

<Example 5>

In the aqueous dispersion liquid for single-walled carbon nanotube produced in Example 1, n-propyl alcohol solution containing perfluorosulfonate/PTFE copolymer (about 1 milliequivalent/g of sulfonic acid group: Nation (trade name) made by DnPont) was added such that the amount of perfluorosulfonate/PTFE copolymer is equal to that of the single-walled carbon nanotube.
The liquid containing the single-walled carbon nanotube, and the Nafion (trade name) made by DuPont, was spray coated on a PET film (COSMOSHINE A 4100 (trade name) made by TOYOBO CO., LTD.) to form a conductive layer.
A measured surface resistivity of the transparent conductive film thus obtained was 820 $\Omega/\square$, and a measured total light transmittance was 75%.
After the sample was subjected to the high temperature durability test in the same as stated above, the surface resistivity after the high-temperature test was 902 $\Omega/\square$, and a change rate thereof was 110%.

<Example 6>

The single-walled carbon nanotube produced by the arc discharge method was reacted with 63% nitric acid at 85°C for two days. Thereafter, the single-walled carbon nanotube containing a carboxylic group was collected by filtration. Two mg of the single-walled carbon nanotube containing a carboxylic group thus obtained, 50 mg of polyethylene glycol octylphenyl ether (made by TOKYO CHEMICAL INDUSTRY CO., LTD.) and 10 g of 0.05 M aqueous sodium hydroxide solution were mixed together. Thereafter, ultrasonic waves were irradiated to the liquid over 1 minutes by an apparatus (ULTRASONIC HOMOGENIZER MODEL UH-600 SR made by SMT CO., LTD) to obtain a dispersion liquid for single-walled carbon nanotube with a sodium carboxylic group (-COONa).

The dispersion liquid thus obtained was spray coated on a PEST film (COSMOSHINE A 4100 (trade name) made by TOYOBO CO., LCD.). Thereafter, octylphenol polyethylene glycol ether was removed with methanol to obtain a transparent conductive film.
A measured surface resistivity of the transparent conductive film thus obtained, was 350 $\Omega/\square$ and a measured total light transmittance was 81.5%.
After the sample was subjected to the high temperature durability test in the same way as stated above, a surface resistivity after the high-temperature test was 420 $\Omega/\square$, and a change rate thereof was 120%.

In the following preferred embodiments of the present application are summarized:

1. A transparent conductive film characterized in that:

a major component of the transparent conductive film is a single-walled carbon nanotube;
the single-walled carbon nanotubes are present in a bundle state; and
a rope-like shape, which is a state where the bundles are gathered together, can be confirmed by scanning electron microscope observation.

2. The transparent conductive film according to claim 1, wherein, in the Raman intensity detected by irradiating a laser with a wavelength of 532 nm, the single-walled carbon nanotube has first absorption in the Raman scattering intensity within the Raman shift range of $1340 \pm 40$ cm$^{-1}$; the single-walled carbon nanotube also has second absorption in the Raman scattering intensity within the Raman shift range of $1590 \pm 20$ cm$^{-1}$; and the equation (1):

$$0 < ID/IG \leq 0.03 \qquad (1)$$

is satisfied, where the first absorption intensity is ID and the second absorption intensity is IG.

3. The transparent conductive film according to item 1 or item 2, wherein a static contact angle of N-methyl-2-pyrrolidone on the transparent conductive film is 0° or more and 5° or less.

4. The transparent conductive film according to any one of items 1 to 3, wherein the single-walled carbon nanotubes In the following preferred embodiments of the present application are summarized: are present in a bundle state in a conductive layer, and the number of the bundles the length of which exceeds 1.5 $\mu$m is larger than that of the bundles the length of which is 1.5 $\mu$m or less.

5. The transparent conductive film according to any one of items 1 to 3, wherein the transparent conductive film has a conductive layer containing a single-walled carbon nanotube with a COOM group (M is a metal element) on its substrate.

6. The transparent conductive film according to any one of items 1 to 3, wherein the transparent conductive film has a conductive layer containing a polymer with a sulfonic acid group and a single-walled carbon nanotube on its substrate.

7. The transparent conductive film according to any one of items 1 to 3, wherein the transparent conductive film has a polymer layer with a sulfonic acid group and a conductive layer containing the single-walled carbon nanotube on its substrate.

8. A transparent electrode substrate using the transparent conductive film according to any one of items 1 to 7.

9. The transparent electrode substrate according to item 8, wherein a film thickness of the transparent conductive film is 10 nm or more and 500 nm or less.

10. A method for producing a liquid crystal alignment film using the transparent electrode substrate according to item 8.

11. A method for producing a carbon nanotube, the method characterized by including the following processes 1 to 4 in the described order:

process 1: a process in which a crude carbon nanotube is obtained by the arc discharge method;

process 2: a process in which the crude carbon nanotube is wetted with a solvent containing water;
process 3: a process in which the crude carbon nanotube is acid treated with an aqueous solution containing nitric acid, and the reaction is performed at a temperature of 60°C or more and 90°C or less and a reaction time is between 24 hours and 72 hours; and
process 4: a process in which a dispersion liquid for purified carbon nanotube is obtained by subjecting the reaction liquid obtained in the preceding process to inside-out circulation filtration.

12. The method for producing a carbon nanotube according to item 11, wherein the crude carbon nanotube, which is obtained by the arc discharge method in the process 1, contains 90% or more of the single-walled carbon nanotube among the whole carbon nanotube.

13. The method for producing a carbon nanotube according to item 11 or item 12, wherein, in the process 3, the aqueous solution containing nitric acid is a nitric acid aqueous solution with a concentration of 50% or more and 65% or less.

14. The method for producing a carbon nanotube according to item 11 or item 12, wherein, assuming that the aqueous solution containing nitric acid in the process 3 is made of water, concentrated nitric acid and concentrated sulfuric acid, and respective volume ratios to the whole aqueous solution containing nitric acid are a (vol%), b (vol%) and c (vol%), the equations (2) and (3):

$$0.20 \leq \{a/(a+b+c)\} \leq 0.40 \qquad (2)$$

$$0.20 \leq \{b/(b+c)\} \leq 0.30 \qquad (3)$$

are satisfied.

15. The method for producing a transparent conductive film according to item 11 or item 12, wherein, in the process 4, a hollow-fiber membrane with a pore size of 0.1 $\mu$m or more and 1 $\mu$m or less is used.

16. The method for producing a carbon nanotube according to any one of items 11 to 15, wherein the following process 5 is included between the process 3 and the process 4:

process 5: a process in which the reaction liquid obtained in the preceding process is cooled and neutralized.

17. The method for producing a carbon nanotube according to item 16, wherein, in the process 5, the reaction liquid obtained in the preceding process is neutralized with sodium carbonate or sodium hydrogen carbonate.

18. The method for producing a carbon nanotube according to any one of items 11 to 17, wherein the following process 6 is included between the process 3 and the process 4:

process 6: a process in which the reaction liquid obtained in the preceding process is added with a dispersant.

19. The method for producing a carbon nanotube according to item 18, wherein the dispersant used in the process 6 is made of a compound containing an alkyl benzyl group.

20. The method for producing a carbon nanotube according to item 18, wherein the dispersant used in the process 6 is made of sodium dodecylbenzene sulfonate.

21. The method for producing a carbon nanotube according to any one of items 11 to 19, wherein the following process 7 is included between the process 3 and the process 4:

process 7: a process in which an ultrasonic wave is irradiated to the reaction liquid obtained in the preceding process.

22. The method for producing a carbon nanotube according to item 21, wherein, in the process 7, a chip-type ultrasonic homogenizer is used.

23. The method for producing a carbon nanotube according to any one of items 11 to 22, wherein the following process 8 is included after the process 4:

process 8: a process in which the carbon nanotubes are aggregated by adding an aggregating agent in the dispersion liquid for a purified carbon nanotube such that the carbon nanotubes are taken out.

24. The method for producing a carbon nanotube according to item 23, wherein the aggregating agent used in the process 8 is isopropyl alcohol.

25. The method for producing a carbon nanotube according to item 23, wherein the aggregating agent used in the process 8 is a salt containing a multivalent cation.

26. A single-walled carbon nanotube obtained by the method according to any one of items 11 to 27, wherein, in the Raman intensity detected by irradiating a laser with a wavelength of 532 nm, the single-walled carbon nanotube has first absorption in the Raman scattering intensity within the Raman shift range of $1340 \pm 40$ cm$^{-1}$; the single-walled carbon nanotube also has second absorption in the Raman scattering intensity within the Raman shift range of $1590 \pm 20$ cm$^{-1}$; and the equation (1):

$$0 < ID/IG \leq 0.03 \qquad (1)$$

is satisfied, where the first absorption intensity is ID and the second absorption intensity is IG.

**Claims**

1. A method for producing a carbon nanotube, the method
**characterized by** including the following processes 1 to 4 in the described order:

   process 1: a process in which a crude carbon nanotube is obtained by the arc discharge method;
   process 2: a process in which the crude carbon nanotube is wetted with a solvent containing water;
   process 3: a process in which the crude carbon nanotube is acid treated with an aqueous solution containing nitric acid, and the reaction is performed at a temperature of 60°C or more and 90°C or less and a reaction time is between 24 hours and 72 hours; and
   process 4: a process in which a dispersion liquid for purified carbon nanotube is obtained by subjecting the reaction liquid obtained in the preceding process to inside-out circulation filtration.

2. The method for producing a carbon nanotube according to claim 1, wherein the crude carbon nanotube, which is obtained by the arc discharge method in the process 1, contains 90% or more of the single-walled carbon nanotube among the whole carbon nanotube.

3. The method for producing a carbon nanotube according to claim 11 or claim 2, wherein, in the process 3, the aqueous solution containing nitric acid is a nitric acid aqueous solution with a concentration of 50% or more and 65% or less.

4. The method for producing a carbon nanotube according to claim 1 or claim 2, wherein, assuming that the aqueous solution containing nitric acid in the process 3 is made of water, concentrated nitric acid and concentrated sulfuric acid, and respective volume ratios to the whole aqueous solution containing nitric acid are a (vol%), b (vol%) and c (vol%), the equations (2) and (3):

$$0.20 \leq \{a/(a+b+c)\} \leq 0.40 \qquad (2)$$

$$0.20 \leq \{b/(b+c)\} \leq 0.30 \qquad (3)$$

are satisfied.

5. The method for producing a transparent conductive film according to claim 1 or claim 2, wherein, in the process 4, a hollow-fiber membrane with a pore size of 0.1 $\mu$m or more and 1 $\mu$m or less is used.

6. The method for producing a carbon nanotube according to any one of claims 1 to 5, wherein the following process 5 is included between the process 3 and the process 4:

process 5: a process in which the reaction liquid obtained in the preceding process is cooled and neutralized.

7. The method for producing a carbon nanotube according to claim 6, wherein, in the process 5, the reaction liquid obtained in the preceding process is neutralized with sodium carbonate or sodium hydrogen carbonate.

8. The method for producing a carbon nanotube according to any one of claims 1 to 7, wherein the following process 6 is included between the process 3 and the process 4:

   process 6: a process in which the reaction liquid obtained in the preceding process is added with a dispersant.

9. The method for producing a carbon nanotube according to claim 8, wherein the dispersant used in the process 6 is made of a compound containing an alkyl benzyl group.

10. The method for producing a carbon nanotube according to claim 8, wherein the dispersant used in the process 6 is made of sodium dodecylbenzene sulfonate.

11. The method for producing a carbon nanotube according to any one of claims 1 to 9, wherein the following process 7 is included between the process 3 and the process 4:

   process 7: a process in which an ultrasonic wave is irradiated to the reaction liquid obtained in the preceding process.

12. The method for producing a carbon nanotube according to claim 11, wherein, in the process 7, a chip-type ultrasonic homogenizer is used.

13. The method for producing a carbon nanotube according to any one of claims 1 to 12, wherein the following process 8 is included after the process 4:

   process 8: a process in which the carbon nanotubes are aggregated by adding an aggregating agent in the dispersion liquid for a purified carbon nanotube such that the carbon nanotubes are taken out.

14. The method for producing a carbon nanotube according to claim 13, wherein the aggregating agent used in the process 8 is isopropyl alcohol.

15. The method for producing a carbon nanotube according to claim 13, wherein the aggregating agent used in the process 8 is a salt containing a multivalent cation.

16. A single-walled carbon nanotube obtained by the method according to any one of claims 1 to 15, wherein, in the Raman intensity detected by irradiating a laser with a wavelength of 532 nm, the single-walled carbon nanotube has first absorption in the Raman scattering intensity within the Raman shift range of $1340 \pm 40$ cm$^{-1}$; the single-walled carbon nanotube also has second absorption in the Raman scattering intensity within the Raman shift range of $1590 \pm 20$ cm$^{-1}$; and the equation (1):

$$0 < ID/IG \leq 0.03 \qquad (1)$$

is satisfied, where the first absorption intensity is ID and the second absorption intensity is IG.

[FIG. 1]

[FIG. 2]

[FIG. 3]

1.0 μm

[FIG. 4]

1. 0 μm

[FIG. 5]

[FIG. 6]

1.0 μm

[FIG. 7]

1.0 μm

[FIG. 8]

0. 6 μm

Europäisches Patentamt

European Patent Office

Office européen des brevets

## EUROPEAN SEARCH REPORT

Application Number

EP 09 16 1029

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VACCARINI ET AL: "Purification procedure of carbon nanotubes" SYNTHETIC METALS, ELSEVIER SEQUOIA, LAUSANNE, CH, vol. 103, no. 1-3, 1 June 1999 (1999-06-01), pages 2492-2493, XP005837739 ISSN: 0379-6779 * the whole document * | 1,2,16 | INV. C01B31/02 |
| X | LIU J ET AL: "FULLERENE PIPES" SCIENCE, AMERICAN ASSOCIATION FOR THE ADVANCEMENT OF SCIENCE, WASHINGTON, DC; US, vol. 280, 22 May 1998 (1998-05-22), pages 1253-1256, XP000960737 ISSN: 0036-8075 * the whole document * | 1-12,16 | |
| X | US 2004/191589 A1 (KATAMURA JUNJI [JP] ET AL) 30 September 2004 (2004-09-30) * paragraphs [0031], [0036]; figure 2 * | 16 | |
| A | VACCARINI L ET AL: "Reinforcement of an epoxy resin by single walled nanotubes" AIP CONFERENCE PROCEEDINGS AIP USA, no. 544, 2000, pages 521-525, XP002557835 ISSN: 0094-243X * the whole document * | 1-13,16 | TECHNICAL FIELDS SEARCHED (IPC)  C01B |

-/--

The present search report has been drawn up for all claims

| Place of search | Date of completion of the search | Examiner |
|---|---|---|
| Munich | 27 November 2009 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 09 16 1029

## DOCUMENTS CONSIDERED TO BE RELEVANT

| Category | Citation of document with indication, where appropriate, of relevant passages | Relevant to claim |
|---|---|---|
| A | MOON J S ET AL: "Transparent conductive film based on carbon nanotubes and PEDOT composites"<br>DIAMOND AND RELATED MATERIALS, ELSEVIER SCIENCE PUBLISHERS, AMSTERDAM, NL, vol. 14, no. 11-12, 1 November 2005 (2005-11-01), pages 1882-1887, XP025331651 ISSN: 0925-9635 [retrieved on 2005-11-01] "Experiments"<br>----- | 1-7,16 |

CLASSIFICATION OF THE APPLICATION (IPC)

TECHNICAL FIELDS SEARCHED (IPC)

The present search report has been drawn up for all claims

| Place of search | Date of completion of the search | Examiner |
|---|---|---|
| Munich | 27 November 2009 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 09 16 1029

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2009

| Patent document cited in search report | Publication date | Patent family member(s) | Publication date |
|---|---|---|---|
| US 2004191589 A1 | 30-09-2004 | JP 2004290793 A | 21-10-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002088241 A
- JP 2006053380 A
- JP 2006154158 A
- JP 2001020071 A
- WO 2002515847 A
- JP 2006036575 A
- WO 2004507436 A
- JP H06228824 A

- JP 2003286014 A
- JP 2000072422 A
- JP 2006069850 A
- JP H07048110 A
- JP H08012310 A
- JP H08198611 A
- JP 2004168570 A
- JP 2003054921 A

**Non-patent literature cited in the description**

- **A. G. Rinzler.** *Appl. Phys. A,* 1998, vol. 67, 29-37
- **L. Hu et al.** *Nano Lett.,* 2004, vol. 4 (12), 2513-2517

- **Zhuangchun Wu et al.** *Science,* 2004, vol. 305, 1273-1276
- **M. Kaempgen et al.** *Applied Surface Science,* 2005, vol. 252, 425-429
- *Langmuir,* 2001, vol. 17, 7172